# DEMANDE DE BREVET EUROPEEN

(11) **EP 2 381 548 A1**
(43) Date de publication de la demande: **26.10.2011**
(21) Numéro de dépôt: 11290136.8
(22) Date de dépôt: 16.03.2011
(51) Int. Cl.: H02B 1/46, H02B 1/40

(54) **Coffret ou tableau de distribution électrique muni de moyens de fixation automatique du capot sur le châssis**

(30) Priorité: 26.04.2010 FR 1001772
(71) Demandeur: Legrand France, 87000 Limoges (FR)
(72) Inventeur: Meriguet, Marcel, 87920 Condat (FR); Normand, Romain, 87000 Limoges (FR); Paez, Eric, 87100 Limoges (FR)
(74) Mandataire: Orsini, Fabienne

(57) **Abrégé**

L'invention concerne un coffret ou tableau de distribution électrique comportant un châssis (100) agencé pour supporter des appareillages électriques modulaires, un capot (200) à rapporter sur le châssis pour enfermer lesdits appareillages électriques modulaires, et au moins un organe de fixation (300) du capot sur le châssis.

Selon l'invention, l'organe de fixation comprend des moyens de montage (310) pour pivoter sur le capot, et des moyens de crochetage (320) du châssis.

## Description

La présente invention concerne de manière générale la distribution de courant électrique dans un bâtiment.

Elle concerne plus particulièrement un coffret ou tableau de distribution électrique tel que défini dans le préambule de la revendication 1.

### ARRIÈRE-PLAN TECHNOLOGIQUE

Un coffret ou tableau de distribution électrique du type précité se présente généralement sous la forme d'une boîte parallélépipédique, dont la paroi avant est formée par le capot et dont la paroi arrière est formée par le châssis.

Pour satisfaire les normes de sécurité, le capot ne doit pouvoir être déposé qu'à l'aide d'un outil, de manière à éviter tout désassemblage accidentel du capot et du châssis.

Il est alors généralement prévu de fixer le capot sur le châssis à l'aide de quatre vis de fixation situées aux quatre coins du capot.

Pour diminuer la durée nécessaire au montage et au démontage du capot sur le châssis, il est connu d'utiliser des vis de fixation à double filets ou à pas rapide. Il n'en demeure pas moins qu'avec de telles vis de fixation, le temps nécessaire au montage du capot sur le châssis reste conséquent.

Les empreintes prévues sur les vis de fixation nécessitent en outre l'utilisation d'outils de tailles et de formes adaptées, ce qui s'avère peu pratique pour l'installateur, à moins de disposer d'une variété d'outils conséquente.

On connaît du document DE 44 16 004 un boîtier destiné à recevoir des composants électriques, dont l'assemblage est facilité. Ce boîtier comporte à cet effet un châssis, un capot à rapporter sur le châssis, et quatre organes de fixation du capot sur le châssis.

Chaque organe de fixation comporte un couvercle équipé de deux crochets, ainsi qu'un étrier permettant au couvercle de pivoter sur le châssis. Cet étrier comporte à cet effet deux axes parallèles dont l'un est monté sur le châssis tandis que l'autre est lié au couvercle par deux tiges.

L'assemblage du boîtier est alors réalisé en trois étapes consistant à rapporter le capot sur le châssis de telle manière qu'un croc du capot s'engage sur le premier axe, à faire pivoter le couvercle de manière que les deux tiges de l'étrier prennent en sandwich deux autres crocs prévus sur le capot et sur le châssis pour les bloquer l'un contre l'autre, et à crocheter le premier axe avec les crochets du couvercle de manière à bloquer l'ensemble en position.

Dans ce document, les crochets du couvercle sont prévus pour coopérer, non pas avec le châssis ou le capot, mais avec le premier axe.

L'inconvénient majeur de ce boîtier est que la manoeuvre des organes de fixation nécessite un dégagement autour du châssis pour permettre à aux couvercles de pivoter. Cette solution technique n'est donc pas applicable à un coffret ou tableau de distribution électrique destiné à être logé dans un espace restreint.

La manoeuvre de ces couvercles doit par ailleurs être faite manuellement, en faisant pivoter ces quatre couvercles l'un après l'autre puis en s'assurant du verrouillage de chacun de ces couvercles, ce qui s'avère fastidieux.

### OBJET DE L'INVENTION

La présente invention propose alors un nouveau coffret ou tableau de distribution électrique, permettant un montage du capot sur le châssis plus pratique, plus rapide, et nécessitant un espace de dégagement restreint.

Plus particulièrement, on propose selon l'invention un coffret ou tableau de distribution électrique tel que défini dans la revendication 1.

L'assemblage du capot et du châssis est ainsi automatique en ce sens qu'il se fait sans l'aide d'outil. En effet, grâce aux moyens de montage à pivotement, il est possible de manoeuvrer l'organe de fixation manuellement, sans l'aide d'outil particulier. Dès lors, cet assemblage est rapide à réaliser.

En outre, puisqu'aucun outil n'est nécessaire pour monter l'ensemble, l'organe de fixation est dépourvu d'empreinte, au bénéfice de l'esthétisme du coffret ou tableau de distribution électrique.

Par ailleurs, grâce à ses moyens de montage à pivotement sur le premier élément, l'organe de fixation est imperdable.

Sa fabrication est en outre simple et peu onéreuse puisque cet organe de fixation peut être réalisé par moulage, préférentiellement d'une seule pièce avec le châssis ou avec le capot.

Grâce aux moyens de crochetage, l'espace nécessaire à la fixation du capot sur le châssis est réduit, ce qui dégage de l'espace pour fixer les borniers ou les rails de montage des appareillages électriques sur le châssis et ce qui permet de positionner le coffret ou tableau de distribution dans un espace restreint.

Grâce au décalage entre l'ergot et l'axe de pivotement, les moyens de crochetage sont agencés pour pivoter automatiquement lorsqu'ils entrent en contact avec l'ergot. De cette manière, un simple appui sur le capot peut permettre de fixer le capot sur le châssis, ce qui facilite l'assemblage de l'ensemble.

Une première caractéristique avantageuse du coffret ou tableau de distribution électrique conforme à l'invention est définie dans la revendication 2.

Grâce à ces moyens de blocage, le coffret ou tableau de distribution électrique, une fois assemblé, est inviolable. De tels moyens de blocage, lorsqu'ils sont activés, permettent en outre d'informer l'installateur que le coffret ou tableau de distribution électrique est correctement assemblé. Ces moyens de blocage confèrent ainsi une fiabilité accrue à l'organe de fixation.

D'autres caractéristiques avantageuses et non limitatives du coffret ou tableau de distribution électrique conforme à l'invention sont définies dans les revendications 3 à 8.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un coffret de distribution électrique selon l'invention,
- la figure 2 est une vue schématique en perspective d'une partie du capot du coffret de la figure 1,
- la figure 3 est une vue schématique en perspective d'une partie du châssis du coffret de la figure 1,
- les figures 4 et 5 sont des vues schématiques de côté du coffret de la figure 1 respectivement représenté en position désassemblée et en position assemblée,
- les figures 6 et 7 sont des vues schématiques partielles en perspective et de côté du coffret de la figure 1, avec un organe de fixation représenté en position d'accostage, et
- les figures 8 et 9 sont des vues similaires à celle de la figure 6, avec l'organe de fixation représenté en position crochetée.

En préliminaire, on utilisera dans la description les termes « avant » et « arrière » suivant le sens du regard de l'installateur vers la paroi murale, l'arrière désignant la zone située du côté de cette paroi murale et l'avant désignant la zone située du côté opposé, vers l'installateur. Les termes « intérieur » et « extérieur » seront quant à eux utilisés par rapport au centre du coffret de distribution électrique, l'intérieur désignant la zone située du côté du centre du coffret et l'extérieur désignant la zone située du côté opposé.

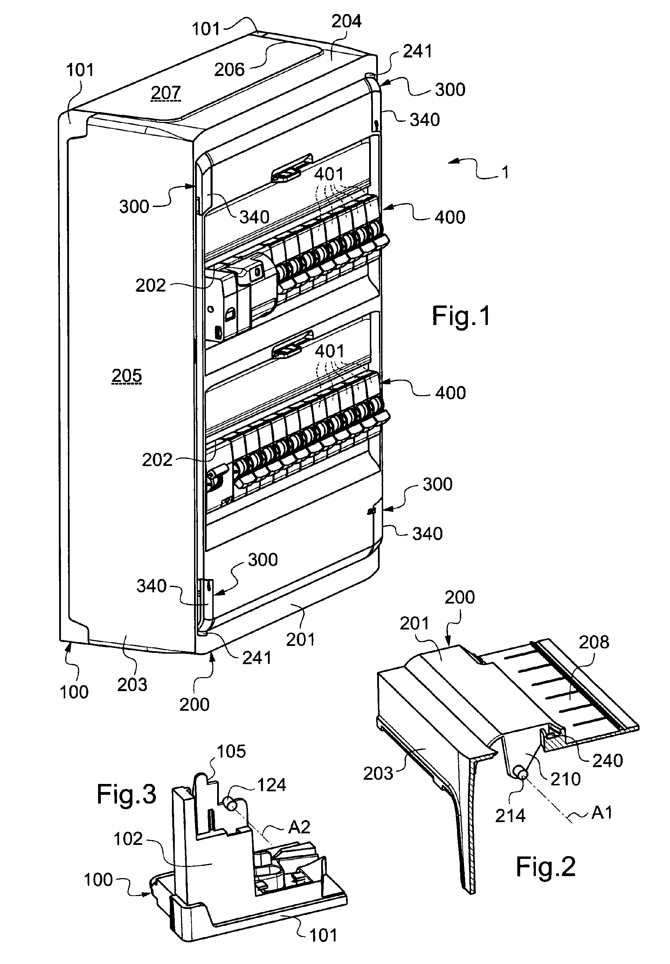

Sur la figure 1, on a représenté un coffret de distribution électrique 1. Un tel coffret de distribution électrique permet, d'une part, de répartir le courant provenant d'un réseau électrique extérieur vers chacun des circuits d'un réseau électrique local d'un bâtiment, et, d'autre part, de couper l'alimentation de ces circuits en cas de surintensité.

Tel que représenté sur la figure 1, ce coffret de distribution électrique 1 se présente sous la forme d'un boîtier comportant un châssis 100 à fixer verticalement sur une paroi murale et un capot 200 de fermeture du châssis.

Le châssis 100 est ici formé de deux longerons 101 agencés pour être fixés verticalement et côte-à-côte sur la paroi murale, à distance l'un de l'autre. Chaque longeron 101 comporte à cet effet, à chacune de ses extrémités, une ouverture d'accueil d'une vis de fixation du châssis 100 à la paroi murale.

En variante, ce châssis pourrait se présenter sous une forme différente, telle que sous la forme d'une plaque rectangulaire présentant quatre ouvertures d'accueil de vis de fixation, respectivement situées à ses quatre coins.

Quelle qu'en soit la forme, le châssis 100 est conçu pour supporter deux rails (non visibles sur les figures) sur lesquels des appareillages électriques modulaires tels que des disjoncteurs 401 peuvent être montés. Ces rails sont ici agencés pour être positionnés en parallèle, horizontalement entre les deux longerons 101, pour porter ainsi deux rangées 400 de disjoncteurs 401.

Comme le montre la figure 3, ce châssis 100 comporte par ailleurs, à chaque extrémité de ses longerons 101, un montant 102 qui s'élève à partir de la face avant du longeron, perpendiculairement à celle-ci. Chaque montant 102 présente, au niveau de son extrémité libre, une encoche 105 d'accueil d'une extrémité d'un bornier de connexion. Un tel bornier de connexion comporte une pluralité de bornes de connexion et permet, une fois fixé sur le châssis 100, de connecter l'ensemble des disjoncteurs 401 à un même câble, par exemple un câble de terre.

Pour éviter, par mesure de sécurité, qu'un accès aux parties câblées des disjoncteurs 401 soit possible de manière fortuite, il est usuel de les coiffer du capot 200 dont émergent, à la faveur de deux fenêtres 202, les seules parties de manoeuvre qu'il est nécessaire de laisser accessible à l'usager.

Le capot 200 comporte à cet effet une paroi avant 201 plane et rectangulaire, bordée en face arrière par une paroi périphérique 203 agencée pour s'appliquer contre les longerons 101 du châssis 100. Les deux fenêtres 202 sont quant à elles prévues dans la paroi avant 201 du capot 200, de manière à laisser libre accès aux leviers de manoeuvre des disjoncteurs 401. A la livraison, comme le montre la figure 2, ces fenêtres 202 sont initialement fermées par des parois sécables 208 permettant d'adapter la taille de ces fenêtres 202 au nombre de disjoncteurs 401 portés par les rails fixés au châssis 100.

La paroi périphérique 203 du capot 200 comporte quant à elle deux panneaux d'extrémité 204 haute et basse, et deux panneaux latéraux 205. Comme le montrent les figures 1 et 2, les panneaux d'extrémité 204 comportent ici chacun une ouverture 206 de grande dimension, initialement fermée par une paroi sécable 207. Cette paroi sécable 207 est défonçable pour permettre à l'installateur de ramener les extrémités des câbles électriques du réseau électrique local à l'intérieur du coffret de distribution électrique 1 afin de les connecter aux disjoncteurs 401.

Les longerons 101 du châssis 100 et le capot 200 sont ici chacun formés d'une seule pièce par moulage d'une matière plastique isolante, telle que l'ABS (Acrylonitrile Butadiène Styrène).

Le coffret de distribution électrique 1 comporte par ailleurs ici, à chacun des quatre coins de son capot 200, un organe de fixation 300 du capot 200 sur le châssis 100.

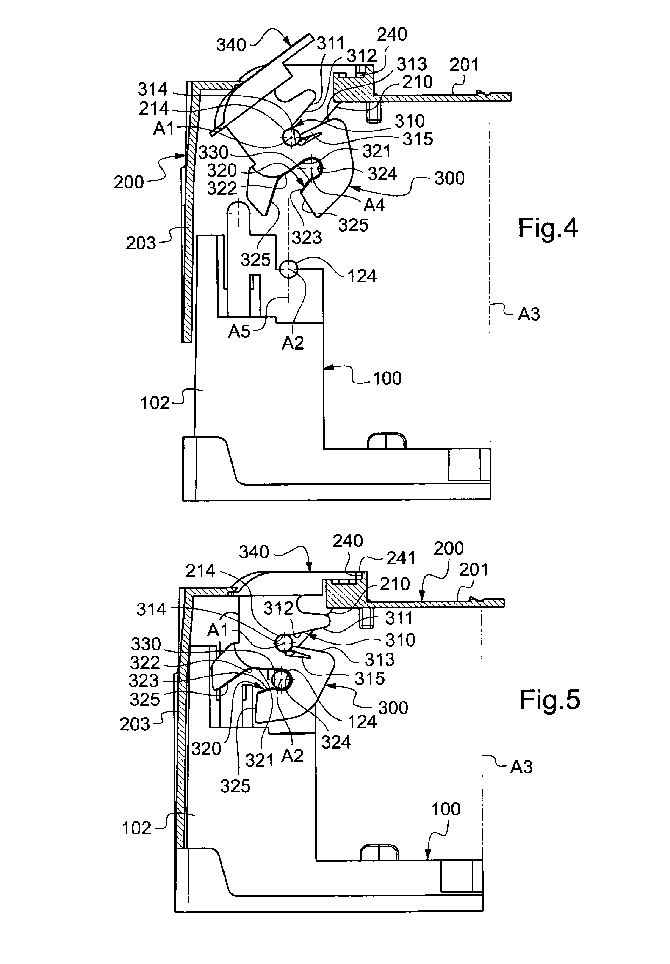

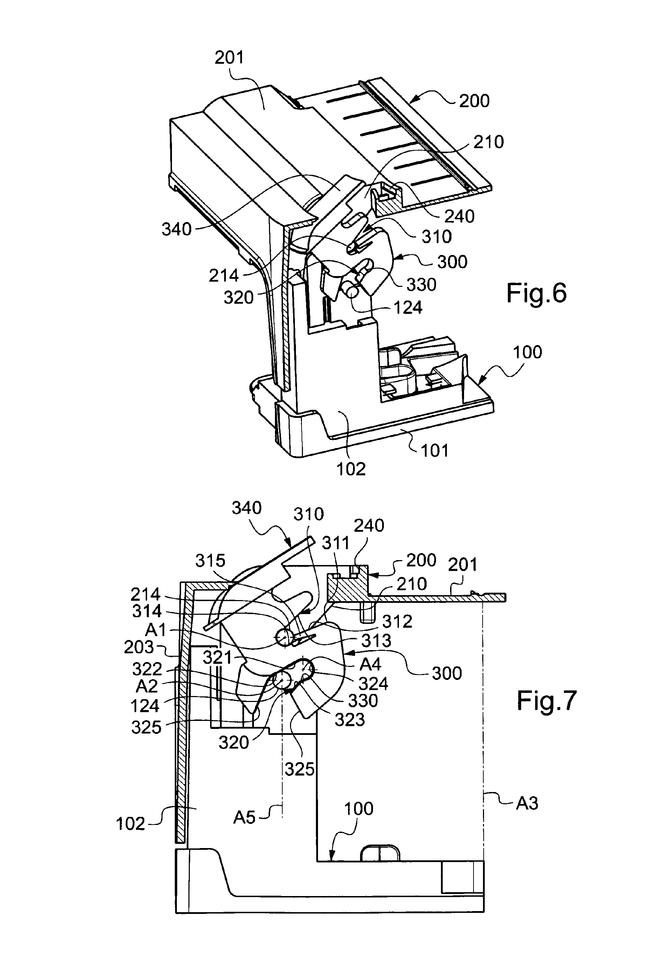

Selon une caractéristique particulièrement avantageuse de l'invention, comme le montrent les figures 4 et 6, chaque organe de fixation 300 comprend ici, d'une part, des moyens de montage à pivotement 310 sur le capot 200, et, d'autre part, des moyens de crochetage 320 du châssis 100.

Les moyens de montage à pivotement 310 sont agencés pour laisser un unique degré de liberté à l'organe de fixation 300 par rapport au capot 200, en l'espèce une mobilité de pivotement autour d'un axe de pivotement A1 horizontal et parallèle à la paroi avant 201 du capot 200.

Ainsi, chaque organe de fixation 300 est adapté à pivoter entre une position d'accostage dans laquelle ses moyens de crochetage 320 sont désactivés (figures 6 et 7), c'est-à-dire non crochetés sur le châssis 100, et une position crochetée dans laquelle ses moyens de crochetage 320 sont activés (figure 5), c'est-à-dire crochetés sur le châssis 100. Ces moyens de crochetage 320 sont par conséquent conçus pour crocheter le châssis 100 à la faveur d'un pivotement de l'organe de fixation 300 autour de l'axe de pivotement A1, depuis sa position d'accostage jusqu'à sa position crochetée.

Tel que représenté sur la figure 4, chaque organe de fixation 300 comporte par ailleurs avantageusement des moyens de blocage 330 de l'organe de fixation 300 en position crochetée sur le châssis 100, et un levier de manoeuvre 340 de l'organe de fixation 300, qui est engagé au travers d'une ouverture 240 pratiquée en correspondance dans la paroi avant 201 du capot 200.

Comme le montrent les figures 4 et 6, chaque organe de fixation 300 se présente ici globalement sous la forme d'une plaque de faible épaisseur en forme de S, qui s'étend parallèlement aux panneaux latéraux 205 du capot 200.

Grâce à sa faible épaisseur, l'organe de fixation 300 présente un encombrement réduit, ce qui permet en particulier de libérer de l'espace en largeur dans le coffret de distribution électrique 1. Il est ainsi par exemple possible de rapporter dans le coffret un bornier de largeur plus importante qu'à l'ordinaire, comportant un nombre accru de bornes de connexion.

Les moyens de montage à pivotement 310 de cet organe de fixation 300 sont ici situés dans le creux avant du S tandis que les moyens de crochetage 320 sont situés dans le creux arrière du S.

Comme le montre plus particulièrement la figure 4, les moyens de montage à pivotement 310 s'étendent au fond d'une première encoche 311 formée par le creux avant du S.

Cette première encoche 311 présente une forme de dièdre en V, avec deux bords avant 312 et arrière 313, et un fond 314 arrondi en demi-cercle autour de l'axe de pivotement A1.

Le capot 200 comporte en correspondance un ergot 214 cylindrique de révolution autour de l'axe de pivotement A1, de diamètre égal au diamètre du fond 314 de la première encoche 311. Cet ergot 214, sur lequel est engagé le fond 314 de la première encoche 311, permet ainsi à l'organe de fixation 300 de pivoter librement autour de l'axe de pivotement A1.

Comme le montre la figure 2, cet ergot 214 est porté par une patte triangulaire 210 qui s'étend à partir de la face arrière de la paroi avant 201 du capot 200, sensiblement perpendiculairement à celle-ci, en direction du châssis 100.

Cette patte triangulaire 210 s'étend ici à une distance du panneau latéral correspondant du capot 200 qui est égale, au jeu près, à l'épaisseur de l'organe de fixation 300. Elle permet donc, en combinaison avec ce panneau latéral 205, de bloquer tout mouvement en translation de l'organe de fixation suivant l'axe de pivotement A1.

Pour retenir l'ergot 214 au fond 314 de la première encoche 311 de l'organe de fixation 300, le bord arrière 313 de cette première encoche 311 porte une languette 315 dont le bord d'extrémité libre est conçu pour s'appuyer contre l'ergot 214 afin de le retenir au contact du fond 314 de cette première encoche 311.

Cette languette 315 s'étend à cet effet le long du bord arrière 313 de la première encoche 311, en direction du fond 314 de cette première encoche 311.

La languette 315 est élastiquement déformable en flexion entre une position fléchie dans laquelle elle s'étend contre le bord arrière 313 de la première encoche 311 pour permettre à cette encoche de s'engager sur l'ergot 214, et une position de repos dans laquelle elle s'étend à distance du bord arrière 313 de la première encoche 311, pour retenir l'ergot 214 au fond 314 de cette encoche.

Comme le montre plus particulièrement la figure 4, les moyens de crochetage 320 de chaque organe de fixation 300 comportent quant à eux une seconde encoche 321 formée par le creux arrière du S. Cette seconde encoche 321 est donc ouverte à l'opposé de la première encoche 311.

Elle présente une forme de U, avec deux bords avant 322 et arrière 323 sensiblement parallèles, et un fond 324 arrondi en demi-cercle autour d'un axe de crochetage A4 parallèle à l'axe de pivotement A1.

Le châssis 100 comporte en correspondance un ergot 124 cylindrique de révolution autour d'un axe de blocage A2 parallèle à l'axe de pivotement A1, et de diamètre égal au diamètre du fond 324 de la seconde encoche 321. Comme le montre la figure 3, cet ergot 124 est porté par l'un des montants 102 du châssis 100, et s'étend depuis la face extérieure de ce montant 102 vers l'extérieur du châssis 100, à distance de l'encoche 105.

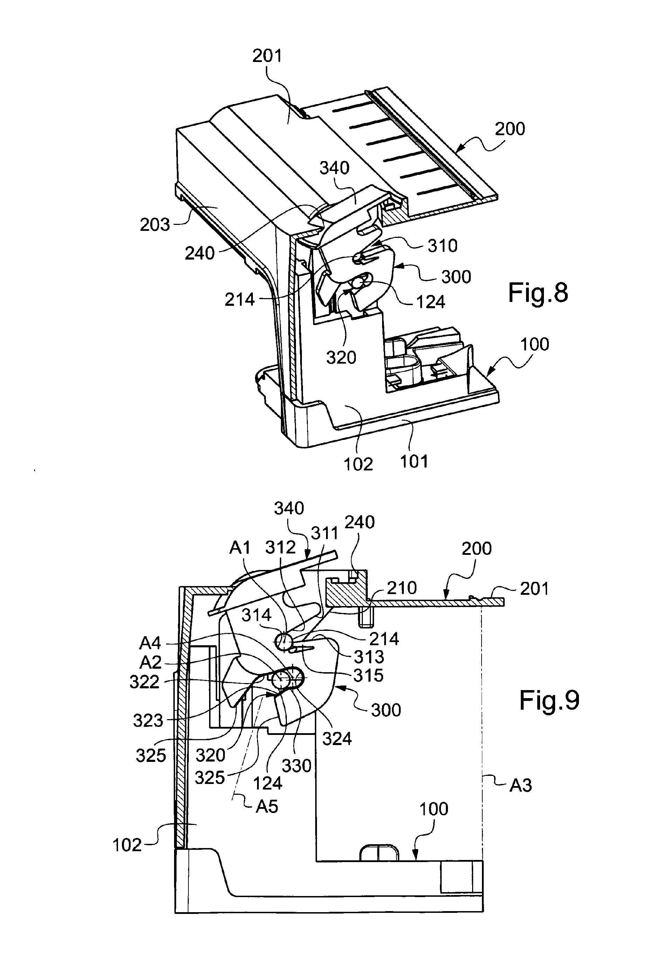

Lorsque le châssis 100 et le capot 200 sont assemblés et que l'organe de fixation 300 n'est pas encore crocheté sur le châssis 100 (voir figure 9), la distance entre l'axe de pivotement A1 et l'axe de blocage A2 est égale à la distance séparant l'axe de crochetage A4 de l'axe de pivotement A1. L'ergot 124 est ainsi situé de telle manière qu'il peut être crocheté par la seconde encoche 321 à la faveur d'un pivotement de l'organe de fixation 300 autour de l'axe de pivotement A1.

Afin de faciliter la mise en place du capot 200 sur le châssis 100, l'embouchure de la seconde encoche 321 est bordée de deux pans inclinés 325 ouverts en V pour former des rampes d'accostage et de guidage sur l'ergot 124 du châssis 100. L'axe médian A5 de ces deux pans inclinés 325, qui correspond à la bissectrice du V formé par ces deux pans inclinés, est ici incliné par rapport à l'axe longitudinal de la seconde encoche 321 de telle manière que lorsque l'organe de fixation 300 est en position désactivée (figure 4), cet axe médian A5 s'étend parallèlement à la direction d'engagement A3 du capot 200 sur le châssis 100.

L'axe de pivotement A1 et l'axe de blocage A2 sont ici avantageusement décalés l'un par rapport à l'autre en projection sur un plan orthogonal à la direction d'engagement A3 du capot 200 sur le châssis 100. Autrement formulé, les axes de pivotement A1 et de blocage A2 présentent des distances différentes à l'axe de la direction d'engagement A3.

L'axe de blocage A2 s'étend plus précisément ici à une distance plus faible du panneau d'extrémité adjacent du capot 200 que l'axe de pivotement A1. Ainsi, comme le montrent les figures 6 et 7, lorsque l'installateur applique un effort sur le capot 200 pour le positionner contre le châssis 100 et que l'ergot 214 entre en contact avec le bord avant 322 de la seconde encoche 321, ce décalage permet à cet effort de générer un couple entraînant naturellement l'organe de fixation 300 en rotation autour de son axe de pivotement A1, en direction de sa position crochetée. L'assemblage du capot 200 avec le châssis 100 est ainsi facilité.

Les moyens de blocage 330 précités sont alors agencés pour bloquer automatiquement chaque organe de fixation 300 en position crochetée lorsque le fond 324 de sa seconde encoche 321 atteint l'ergot 124.

Comme le montre plus particulièrement la figure 4, ces moyens de blocage sont ici des moyens d'encliquetage 330 comportant, en saillie sur le bord arrière 323 de la seconde encoche 321, un renflement 330 qui permet de réduire la section de passage de l'ergot 214 dans l'encoche. Ainsi, lorsque la seconde encoche 321 s'engage sur l'ergot 241, son renflement 330 bute contre l'ergot 214.

Ce renflement 330 est situé à une distance du fond 324 de cette seconde encoche 321 qui est telle qu'une fois que l'on a forcé le renflement 330 à passer l'ergot 124, cet ergot reste coincé entre ce renflement et le fond 324 de cette seconde encoche 321.

Le levier de manoeuvre 340 de chaque organe de fixation 300 est alors ici nécessaire pour forcer le renflement 330 de la seconde encoche 321 à passer au-delà de l'ergot 124. Le décalage entre les axes de pivotement A1 et de crochetage A2 ne suffit en effet pas pour forcer le renflement 330 à passer au-delà de l'ergot 124.

Ce levier de manoeuvre 340 vient de formation avec le reste de l'organe de fixation 300 par moulage d'une matière plastique telle que l'ABS. Il est ainsi mobile en rotation autour de l'axe de pivotement A1 entre une position déverrouillée dans laquelle l'organe de fixation 300 est en position désactivée, et une position verrouillée dans laquelle l'organe de fixation 300 est en position crochetée sur l'ergot 124 du châssis 100.

Ce levier de manoeuvre 340 est ici agencé de manière à être manoeuvrable manuellement lorsqu'il se trouve en position déverrouillée. Ce levier de manoeuvre 340 et l'ouverture 240 pratiquée dans le capot 200 sont en revanche ici agencés de telle manière qu'en position verrouillée, le levier ne soit plus manoeuvrable manuellement mais qu'il nécessite au contraire l'utilisation d'un outil pour décrocheter l'organe de fixation 300 de l'ergot 124 du châssis 100.

Ce levier de manoeuvre 340 présente à cette effet une face avant rectangulaire de largeur égale à la largeur de l'ouverture 240 rectangulaire et de longueur légèrement plus faible que la longueur de cette ouverture 240. En position verrouillée, l'un des bords d'extrémité de ce levier de manoeuvre 340 délimite alors avec le bord correspondant de l'ouverture 240 une fente 241 d'accès à une pointe d'un outil de déverrouillage (figure 5). Cette fente 241 présente une largeur comprise entre 1 et 3 millimètres et permet ainsi à l'installateur d'engager l'outil de déverrouillage sous le bord d'extrémité du levier de manoeuvre 340 afin de l'utiliser à la manière d'un pied-de-biche.

L'assemblage du coffret de distribution électrique 1 est ici réalisé de la manière suivante.

Au cours d'une première étape préférentiellement mise en oeuvre chez le fabricant du coffret, le capot 200 est équipé de ses quatre organes de fixation 300.

Ces organes de fixation 300 sont à cet effet rapportés par l'arrière du capot 200, en engageant leurs leviers de manoeuvre 340 dans les ouvertures 240 correspondantes du capot 200 et leurs premières encoches 311 sur les ergots 214 correspondants du capot 200.

Lorsque les premières encoches 311 s'engagent sur les ergots 214, les languettes 315 fléchissent vers le bord arrière 313 desdites encoches 311 pour permettre aux ergots 214 d'accéder librement aux fonds 314 de ces premières encoches 311. Puis, lorsque les ergots 214 arrivent aux fonds 314 des premières encoches 311, ces languettes 315 reviennent élastiquement en position de repos, avec leurs extrémités libres en appui contre les ergots 214, pour bloquer ces ergots 214 aux fonds 314 des premières encoches 311.

Le capot 200 ainsi équipé de ses quatre organes de fixation est alors prêt à être livré avec le châssis 100 à l'installateur.

Au cours d'une seconde étape réalisée par l'installateur du coffret de distribution électrique 1, le capot 200 est rapporté sur le châssis 100 préalablement fixé à la paroi murale.

L'installateur engage alors le capot 200 sur le châssis 100 suivant la direction d'engagement A3 (figure 4), en prenant soin que les secondes encoches 321 des organes de fixation 300 viennent en prise sur les ergots 124 du châssis 100. Cette opération est facilitée par les pans inclinés 325 situés aux embouchures des secondes encoches 321, qui guident ces secondes encoches 321 vers les ergots 124 correspondants.

Lorsque les ergots 124 du châssis 100 viennent en appui contre les bords avant 322 des secondes encoches 321 des organes de fixation 300 (figures 6 et 7), ils font alors naturellement pivoter ces organes de fixation 300 autour de leurs axes de pivotement A1. Ce pivotement s'arrête lorsque les renflements 330 prévus sur les secondes encoches 321 butent contre les ergots 124 du châssis 100. L'installateur doit alors exercer sur les faces avant des leviers de manoeuvre 340 des organes de fixation 300 un effort permettant de les faire pivoter autour de leurs axes de pivotement A1, jusqu'à ce que les renflements 330 passent par-delà les ergots 124 et bloquent ainsi les organes de fixation 300 en position crochetée sur le châssis 100.

Ainsi, le coffret de distribution électrique 1 est solidement assemblé, de sorte que le capot 200 ne présente plus aucun risque de démontage accidentel. L'assemblage obtenu est par ailleurs esthétique puisque les faces avant des leviers de manoeuvre 340 des organes de fixation 300 s'étendent dans le prolongement de la face avant de la paroi avant 201 du capot 200.

Pour déposer le capot 200, l'installateur doit alors nécessairement se munir d'un tournevis plat. Les renflements 330 prévus dans les secondes encoches 321 des organes de fixation 300 présentent en effet des tailles et des rigidités telles qu'ils interdisent le déverrouillage manuel des leviers de manoeuvre 340.

L'installateur engage alors pour cela la pointe du tournevis dans les fentes 241 délimitées entre les leviers de manoeuvre 340 et les ouvertures 240 du capot 200, puis fait basculer ce tournevis en prenant appui contre le bord correspondant du capot de manière à forcer le déverrouillage des organes de fixation 300. La dimension du tournevis importe peu, pour autant que sa pointe présente une taille inférieure ou égale à celle des fentes 241.

La présente invention n'est nullement limitée aux modes de réalisation décrits et représentés, mais l'homme du métier saura y apporter toute variante conforme à son esprit.

En particulier, on pourrait prévoir que les moyens d'encliquetage soient distincts des moyens de crochetage. Ils pourraient à titre d'exemple être situés non pas dans la seconde encoche, mais plutôt sur le levier de manoeuvre lui-même.

On pourrait aussi prévoir de remplacer ces moyens d'encliquetage par d'autres types de moyens de blocage, tels que par exemple par des aimants fixés au levier de manoeuvre et au châssis pour assurer le blocage des organes de fixation en position crochetée.

En variante, on pourrait aussi prévoir que la surface du fond de la première encoche soit rugueuse, pour assurer à elle seule le maintien des organes de fixation en position crochetée. Aucun moyen spécifique de blocage des organes de fixation en position crochetée ne serait plus alors nécessaire.

On pourrait encore en variante prévoir que les organes de fixation soient dépourvus de levier de manoeuvre, auquel cas seul le décalage prévu entre l'axe de pivotement et l'axe de blocage permettrait de faire pivoter les organes de fixation. Dans cette variante, il serait alors nécessaire de prévoir un décalage particulièrement important entre ces deux axes, de manière qu'une simple pression du capot sur le châssis permette de générer un couple suffisant sur les organes de fixation pour que les ergots passent au-delà des renflements prévus dans les secondes encoches. La dépose du capot ne pouvant plus être réalisée en face avant du capot par l'intermédiaire des leviers de manoeuvre, elle devrait alors être effectuée en engageant la pointe d'un outil entre la jonction du capot et du châssis, afin de générer sur les organes de fixation un couple inverse permettant de les déverrouiller.

Selon une autre variante, on pourra prévoir que le coffret ne comporte qu'un seul organe de fixation. On pourra par exemple prévoir que le capot et le châssis soient raccordés en partie basse par une charnière et que l'organe de fixation soit positionné en partie haute pour verrouiller cette charnière.

Encore en variante, on pourra prévoir que l'organe de fixation soit monté à pivotement non pas sur le capot, mais plutôt sur le châssis, et qu'il soit alors adapté à crocheter le capot. Dans cette variante, les moyens de montage à pivotement de l'organe de fixation pourront par exemple être situés dans le creux arrière du S formé par l'organe de fixation, tandis que les moyens de crochetage seront situés dans le creux avant du S.

Enfin, on pourra aussi prévoir que les moyens de crochetage comportent non pas une encoche à engager sur un ergot du châssis, mais plutôt un ergot à engager dans une encoche du châssis, auquel cas l'organe de fixation présentera une forme différente de celle représentée sur les figures.

## Revendications

1. Coffret ou tableau de distribution électrique (1), comportant :
- un châssis (100),
- un capot (200) à rapporter sur le châssis (100) suivant une direction d'engagement (A3), et
au moins un organe de fixation (300) du capot (200) sur le châssis (100), qui comprend :
- des moyens de montage (310) qui sont adaptés à coopérer avec des moyens de montage complémentaires (214) prévus sur un premier des deux éléments (100, 200) constitués par le châssis (100) et le capot (200), pour permettre audit organe de fixation (300) de pivoter par rapport à ce premier élément autour d'un axe de pivotement (A1), et
- des moyens de crochetage (320) qui sont adaptés à coopérer avec des moyens de crochetage complémentaires (124) prévus sur le second des deux éléments (100, 200),
**caractérisé en ce que** lesdits moyens de crochetage complémentaires (124) et les moyens de crochetage (320) comportent respectivement un ergot (124) et une encoche (321), cette encoche (321) étant agencée pour crocheter cet ergot (124) à la faveur du pivotement dudit organe de fixation (300) par rapport au premier élément (200), et
**en ce que** ledit ergot (124) s'étend suivant un axe (A2) qui, en projection sur un plan orthogonal à la direction d'engagement (A3), est décalé par rapport à l'axe de pivotement (A1).

2. Coffret ou tableau de distribution électrique (1) selon la revendication 1, dans lequel il est prévu des moyens de blocage (330) dudit organe de fixation (300) en position crochetée sur ledit second élément (100, 200).

3. Coffret ou tableau de distribution électrique (1) selon la revendication 2, dans lequel, ledit organe de fixation (300) étant adapté à pivoter entre une position d'accostage dans laquelle ses moyens de crochetage (320) sont situés à distance des moyens de crochetage complémentaires (124) du second élément (100, 200) et une position crochetée dans laquelle ses moyens de crochetage (320) sont crochetés sur les moyens de crochetage complémentaires (124) du second élément (100, 200), lesdits moyens de blocage (330) sont agencés pour bloquer automatiquement ledit organe de fixation (300) lorsqu'il pivote depuis sa position d'accostage jusqu'à sa position crochetée.

4. Coffret ou tableau de distribution électrique (1) selon l'une des revendications 2 et 3, dans lequel lesdits moyens de blocage sont des moyens d'encliquetage (330).

5. Coffret ou tableau de distribution électrique (1) selon la revendication 4, dans lequel ladite encoche (321) présente une forme en U avec un fond et deux côtés, et dans lequel lesdits moyens d'encliquetage comportent, en saillie sur l'un des côtés de ladite encoche (321), un renflement (330) adapté à bloquer l'ergot (124) au fond de ladite encoche (321).

6. Coffret ou tableau de distribution électrique (1) selon l'une des revendications 1 à 5, dans lequel l'organe de fixation (300) comporte un levier de manoeuvre (340) mobile entre une position déverrouillée dans laquelle il est manoeuvrable manuellement, et une position verrouillée dans laquelle, ledit organe de fixation (300) étant en position crochetée sur ledit second élément (100), il n'est plus manoeuvrable manuellement.

7. Coffret ou tableau de distribution électrique selon la revendication 6, dans lequel le levier de manoeuvre (340) est engagé dans une ouverture (240) pratiquée dans une paroi du capot (200) et est agencé pour, en position verrouillée, fermer cette ouverture (240) en laissant accessible une fente (241) permettant d'y engager une pointe d'un outil de déverrouillage.

8. Coffret ou tableau de distribution électrique (1) selon l'une des revendications 1 à 7, dans lequel lesdits moyens de montage complémentaires (214) sont prévus sur le capot (200) et lesdits moyens de crochetage complémentaires (124) sont prévus sur le châssis (100).

## Revendications modifiées

### Revendications modifiées conformément à la règle 137(2) CBE.

**1.** Coffret ou tableau de distribution électrique (1), comportant :
- un châssis (100),
- un capot (200) à rapporter sur le châssis (100) suivant une direction d'engagement (A3), et
au moins un organe de fixation (300) du capot (200) sur le châssis (100), qui comprend :
- des moyens de montage (310) qui sont adaptés à coopérer avec des moyens de montage complémentaires (214) prévus sur un premier des deux éléments (100, 200) constitués par le châssis (100) et le capot (200), pour permettre audit organe de fixation (300) de pivoter par rapport à ce premier élément autour d'un axe de pivotement (A1), et
- des moyens de crochetage (320) qui sont adaptés à coopérer avec des moyens de crochetage complémentaires (124) prévus sur le second des deux éléments (100, 200),
**caractérisé en ce que** lesdits moyens de crochetage complémentaires (124) et les moyens de crochetage (320) comportent respectivement un ergot (124) et une encoche (321), cette encoche (321) étant agencée pour crocheter cet ergot (124) à la faveur du pivotement dudit organe de fixation (300) par rapport au premier élément (200), et
**en ce que** ledit ergot (124) s'étend suivant un axe (A2) qui, en projection sur un plan orthogonal à la direction d'engagement (A3), est décalé par rapport à l'axe de pivotement (A1) de manière à générer un couple entraînant naturellement l'organe de fixation 300 en rotation autour dudit axe de picotement (A1), en direction de sa position crochetée, lorsque l'installateur applique un effort sur le capot (200) suivant la direction d'engagement (A3).

**2.** Coffret ou tableau de distribution électrique (1) selon la revendication 1, dans lequel il est prévu des moyens de blocage (330) dudit organe de fixation (300) en position crochetée sur ledit second élément (100, 200).

**3.** Coffret ou tableau de distribution électrique (1) selon la revendication 2, dans lequel, ledit organe de fixation (300) étant adapté à pivoter entre une position d'accostage dans laquelle ses moyens de crochetage (320) sont situés à distance des moyens de crochetage complémentaires (124) du second élément (100, 200) et une position crochetée dans laquelle ses moyens de crochetage (320) sont crochetés sur les moyens de crochetage complémentaires (124) du second élément (100, 200), lesdits moyens de blocage (330) sont agencés pour bloquer automatiquement ledit organe de fixation (300) lorsqu'il pivote depuis sa position d'accostage jusqu'à sa position crochetée.

**4.** Coffret ou tableau de distribution électrique (1) selon l'une des revendications 2 et 3, dans lequel lesdits moyens de blocage sont des moyens d'encliquetage (330).

**5.** Coffret ou tableau de distribution électrique (1) selon la revendication 4, dans lequel ladite encoche (321) présente une forme en U avec un fond et deux côtés, et dans lequel lesdits moyens d'encliquetage comportent, en saillie sur l'un des côtés de ladite encoche (321), un renflement (330) adapté à bloquer l'ergot (124) au fond de ladite encoche (321).

**6.** Coffret ou tableau de distribution électrique (1) selon l'une des revendications 1 à 5, dans lequel l'organe de fixation (300) comporte un levier de manoeuvre (340) mobile entre une position déverrouillée dans laquelle il est manoeuvrable manuellement, et une position verrouillée dans laquelle, ledit organe de fixation (300) étant en position crochetée sur ledit second élément (100), il n'est plus manoeuvrable manuellement.

**7.** Coffret ou tableau de distribution électrique selon la revendication 6, dans lequel le levier de manoeuvre (340) est engagé dans une ouverture (240) pratiquée dans une paroi du capot (200) et est agencé pour, en position verrouillée, fermer cette ouverture (240) en laissant accessible une fente (241) permettant d'y engager une pointe d'un outil de déverrouillage.

**8.** Coffret ou tableau de distribution électrique (1) selon l'une des revendications 1 à 7, dans lequel lesdits moyens de montage complémentaires (214) sont prévus sur le capot (200) et lesdits moyens de crochetage complémentaires (124) sont prévus sur le châssis (100).
